# EUROPEAN PATENT SPECIFICATION

(11) **EP 3 453 518 B1**
(45) Date of publication and mention of the grant of the patent: **08.11.2023**
(21) Application number: 17190115.0
(22) Date of filing: 08.09.2017
(51) Int. Cl.: B29C 53/82, B29C 33/44, B29C 37/00, B29C 53/62, B29C 53/78, B29C 53/80

(54) **METHOD AND APPARATUS FOR EJECTING A HELICALLY WOUND PIPE FROM A MANDREL**
VERFAHREN UND VORRICHTUNG ZUM AUSSTOSSEN EINES SCHRAUBENFÖRMIG GEWICKELTEN ROHRS AUS EINEM DORN
PROCÉDÉ ET APPAREIL D'ÉJECTION D'UN TUBE ENROULÉ DE FAÇON HÉLICOÏDALE D'UN MANDRIN

(43) Date of publication of application: 13.03.2019
(73) Proprietor: Uponor Infra Oy, 00240 Helsinki (FI)
(72) Inventor: NYSTRAND, Anders, 65200 Vaasa (FI); KOIVULA, Antti, 50342 Boras (SE); SIEKKINEN, Alpo, 62370 Kangasto (FI); SWISTEK, Janusz, 97-415 Kluki (PL)
(74) Representative: Laine IP Oy

(56) References cited:
- US-A- 4 080 142
- US-A- 5 306 371
- US-A1- 2016 214 339

## Description

### FIELD

The invention relates to manufacture of spirally wound polyolefin pipes and vessels.

### BACKGROUND

Spirally wound polyolefin pipes are used in various infrastructure systems for distribution of water, drainage, energy, electricity or any other purpose where a flow channels or protection form environment are needed. Similar uses can be found in industry and other fields of technology. Spirally wound pipe may have a very large diameter and the strength of the pipe can be adjusted to large range of purposes. The manufacturing method is suitable for making vessels as well as pipes. Spirally wound pipes or vessels are manufactured by winding a plastic profile around a mandrel as a spiral. When the profile is wound on the mandrel, the edge of the incoming profile is fused on the previous round of the profile in order to form a

The fusing of the rounds of the profile together is commonly done by welding or otherwise heating the surfaces that are joined together. Alternatively the profile that is wound on the mandrel may be extruded or heated hot enough to provide fusion of the edges of the profile together.

After end of production a piece of pipe remains on the mandrel. The length of the remaining pipe varies between 1 to 2m depending on diameter of the pipe that is manufactured and winder type used. This remaining part is cut up and handled as scrap. This so called stop scrap increases the consumption of the material and work needed for producing a certain length of pipe and increases manufacturing costs. Increased costs and loss of manufacturing time make short production runs unfeasible, which reduces flexibility of the manufacture. These factors are underlined in manufacture of prefabricates for vessels. As the length of a prefabricate may be typically 2 - 5 m, loss of 1 to 2 meters of manufactured material induces high costs. This is further emphasized by a fact that manufacture of spirally wound pipes or vessels is rather time consuming, whereby the productive input used is markable. <2A>

### SUMMARY OF THE INVENTION

The invention is defined by the features of the independent claims. Some specific embodiments are defined in the dependent claims.

US 4 080 142 discloses a winding apparatus for manufacturing a tubular article including a pusher for removing the article from a mandrel.

### BRIEF DESCRIPTION OF THE DRAWINGS

FIGURE 1 illustrates a winder for producing a spirally wound pipe and an ejector

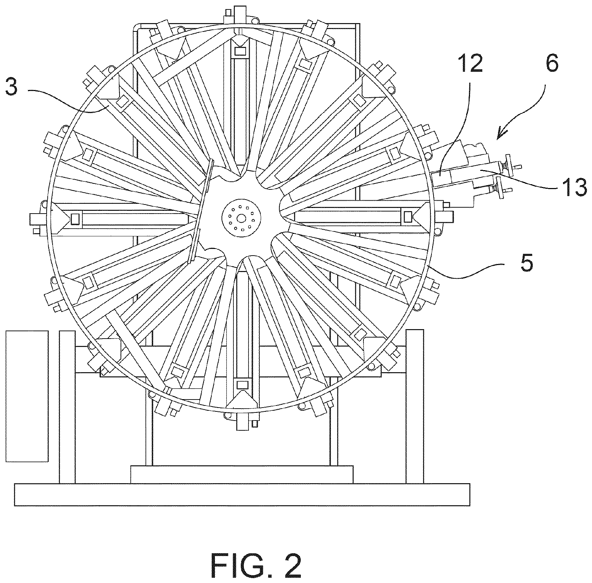

FIGURE 2 is a front view of the winder of the FIGURE 1;
FIGURE 3 is a side view of the winder of the FIGURE 1;

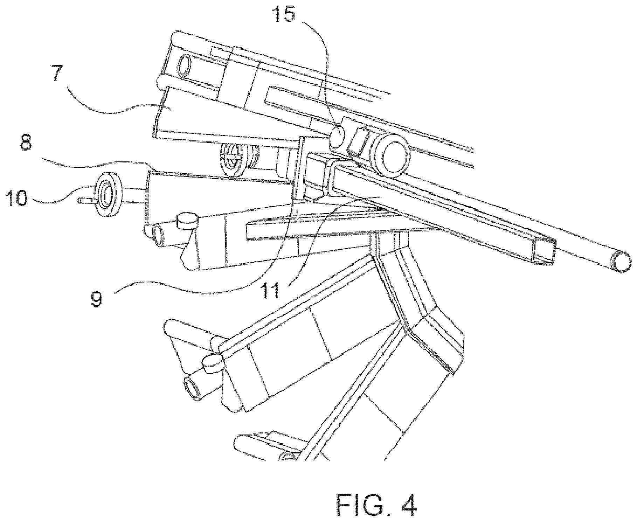

FIGURE 4 illustrates a detail of FIGURE 1;
FIGURE 5 illustrates the winder of FIGURE 1 in a second setup;
FIGURE 6 illustrates the winder of FIGURE 1 in a third setup;
FIGURE 7 illustrates an example apparatus of FIGURE 1

### EMBODIMENTS

### DEFINITIONS

In the present context, the term "pipe section" is used to describe any object made of spirally wound polyolefin profile, for example pipes, vessels, prefabricates and parts thereof.

The longitudinal central axis of the mandrel is the axis around which the cylindrical mandrel can be rotated, i.e. central axis of the cylinder forming the mandrel.

One example of an apparatus for manufacturing spirally wound pipes is described in US 6939422. This document may be used as reference if more detailed description of the manufacturing method as such is needed.

The present disclosure relates to manufacture of spirally wound polyolefin pipes, in particular ejecting the remaining part of pipe away from mandrel after end of production of one size of a pipe. After the end of production run of a defined size of a pipe, a piece of pipe remains on the mandrel. The length of the remaining piece of pipe varies, for example, between 1 to 2m depending on pipe diameter and winder type. This remaining part is cut up and handled as scrap. Since pipe sizes are usually quite large, the amount of recycled material is high. This so called stop scrap can be reduced by the embodiments of the invention. Reduced amount of scrap will also make shorter production runs more feasible. Increased feasibility of shorter production runs can lead to shorter lead time for certain prefabricated products, such as prefabricates for vessels. Customers of manufacturers will have a clear economic benefit. Environmental gains are also achieved through reduced scrap by the various embodiments of the invention.

Upon circumstances, the ejector comprises two identical units located on the winder star and working on opposite sides of the pipe. The ejector units are arranged to push the manufactured pipe off the mandrel until the pipe is clear from the mandrel. Main parts of each unit are contact roller, screw jack, jack motor/gearbox and adjusting/support frame. The functional principle is that the winder rotation (rotation of the mandrel and the pipe section on it) of the spirally wound pipe works as a screw when rotating and pushing itself forward by the force against the ejector rollers. The ejector rollers are driven forward by the screw jack after passing the end of the pipe profile every revolution. Forces from the ejector rollers and screw jacks are transferred to the winder frame through the adjusting/support frame. The position of the units are adjusted according to the mandrel size by moving the adjusting/support frame in or out from the centre of the mandrel.

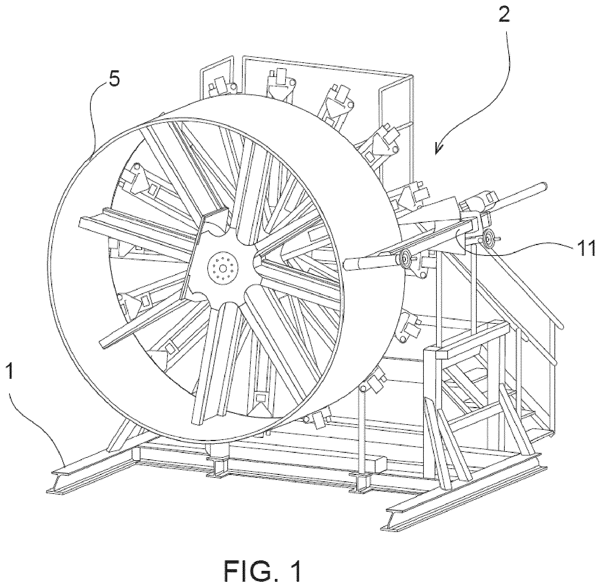

FIGURE 1 illustrates a winder for producing a spirally wound pipe and an ejector in accordance with at least some embodiments of the present invention. The winder has a frame 1 on which is supported a winder star 2. The winder star 2 has several spokes 3, on which a mounted radial support rollers 4. The position of the radial support rollers 4 on the spokes can be adjusted radially in relation to the centre of the winding star 2. The radial position of the radial support rollers 4 is set according to the diameter of the pipe that is manufactured. The mandrel 5 rotates with the main shaft in the centre of the winder star 2. The mandrel is set to rotate by the winder. The mandrel sets the inner diameter of the pipe. During the manufacturing process, the polyolefin pipe that is formed of profile that is wound around the mandrel 5, shrinks, and causes a tight compression between the pipe and mandrel. The shrinking force is directed over a large surface area, whereby the total force is high, keeping the pipe on the mandrel. On the other hand, the end edge of the pipe that is manufactured may still be soft because of heat needed for fusing the successive rounds of profile together to form the pipe. The removal of the remaining piece of pipe requires some force to overcome the friction between the mandrel and the pipe. Simultaneously deformation of the end of the pipe has to be avoided.

Removal or ejection of the pipe section that is remaining on the mandrel 5 at the end of the production run can be accomplished by various embodiments of the invention. The ejector unit 6 comprises an adjusting/support frame formed of a ejector fastening plate 7 that is mounted between two adjacent spokes 3 of the winding star 2. The ejector fastening plate 7 has two plate parts and a gap therebetween. The edges of the gap are equipped with adjustment rails 8. The main body of the ejector unit, a ejector radial adjustment trolley 9 is mounted transferrable on the adjustment rails 8. The ejector radial adjustment trolley 9 can be moved on the adjustment rails 8 so that its radial position in relation to the centre of the winding star 2 can be set to correspond with the diameter of the mandrel 5 used and the pipe size that is manufactured. The adjustment of the position of the ejector radial adjustment trolley 9 can be made by a hand wheel 10 and a screw, but more feasible solution might be an electric, pneumatic or hydraulic actuator that can be controlled remotely or directly by operating system of the winder.

The actual pushing elements of the ejector comprise a screw jack assembly 11 that is mounted on the ejector radial adjustment trolley 9 and extends parallel to the longitudinal axis of the mandrel 5 (and the winder star 2) between the spokes 3 of the winder star 2. The screw jack assembly is operated by a motor/gear box unit 15. The end of the screw jack assembly 11 comprises an ejector roller 12 that is set in a crosswise position on relation to the centre axis of the mandrel 5. The ejector roller 12 is mounted to rotate freely around it axis. The ejector roller telescope 13 extends the ejector roller adjusting range. The screw jack assembly can be replaced by a hydraulic actuator and the ejector roller may be replaced by an ejector shoe having a glide surface, a set of parallel rollers or a belt supported by rollers, for example.

The operation principle of the above described apparatus is described in the following together with some alternatives for various parts of the apparatus.

First, the position of the ejector unit 6 is adjusted according to the mandrel 5 and the pipe size that is manufactured. This is accomplished by moving the screw jack assembly 11 with the ejector roller 12 on the adjustment rails 8 by moving the ejector radial adjustment trolley 9. When the production run of the pipe is finished, the end of the profile that is wound on the mandrel 5 is cut. The profile is cut by hand by an operator or a cutter may be provided for automated cutting. The end of the cut profile forms a step at the end of the pipe. After the profile is cut, the ejector roller 12 can be pushed against the end edge of the pipe. The ejector roller 12 is locked or held in this position. As the profile is wound spirally around the mandrel 5, the end of the pipe is not perpendicular in relation to the longitudinal axis of the mandrel, but the angled according to the rise of the spiral. On the other words, the end forms a part of a screw thread. Now, as the ejector roller is held in set location by the screw jack assembly 11, rotation of the mandrel 5 pushes the end of the pipe towards the ejector roller 12. As the end of the pipe is angled, the ejector roller 12 pushes the pipe in the direction of the longitudinal axis of the mandrel according to the rise of the angle of the end of the pipe. Thus the section of the pipe remaining on the mandrel is gently removed.

When the ejector roller 12 reaches the location of the end of the profile, contact with the end of the pipe is released. Now the ejector roller 12 has to be pushed towards the end of the pipe by the screw jack assembly 11 in order to continue ejection of the pipe. The end of the profile or the step formed where the profile is cut, can be detected in several ways. The setting of the apparatus can be done an operator manually so that the operator uses the screw jack assembly 11 as needed. One way is to monitor the rotation of the ejector roller 12 by a suitable detector or controller. The ejector roller 12 is rotated by movement of the end of the pipe and when the contact with the pipe is lost, the rotation stops. This indicates the end of the profile and need to move the ejector roller forward. Another way to monitor this is to monitor the force transferred from the ejector roller to the screw jack assembly 11. When there is a drop in the holding force, loss of contact is indicated. This method might be more suitable in embodiments where hydraulic actuators are used instead of a screw jack. Of course, the end of the profile or the step formed can be detected with any mechanical, optical or other conventional indicator or detector, for example ones that are used as limit switch. One effective way is to monitor the angle of rotation of the mandrel and actuate the screw jack assembly on basis of the angular position. The position of the end of the profile can be set on a control system of the manufacturing apparatus. Further, it must be noted that the forward movement of the ejector roller may be sequenced with any desired angular position of the mandrel and pipe on it as long as the angled end of the pipe and the ejector roller have free space therebetween allowing the movement of the roller. The roller is moved towards the end of the mandrel every time after the end of the profile is detected until the pipe is completely ejected from the mandrel. Thereafter the ejector roller may be returned to a starting position. One feature that increases the effectiveness of the ejector is the possibility to increase the rotational speed of the mandrel during the ejection process. The manufacturing phase requires low rotational speed. During the ejection much higher speed can be used.

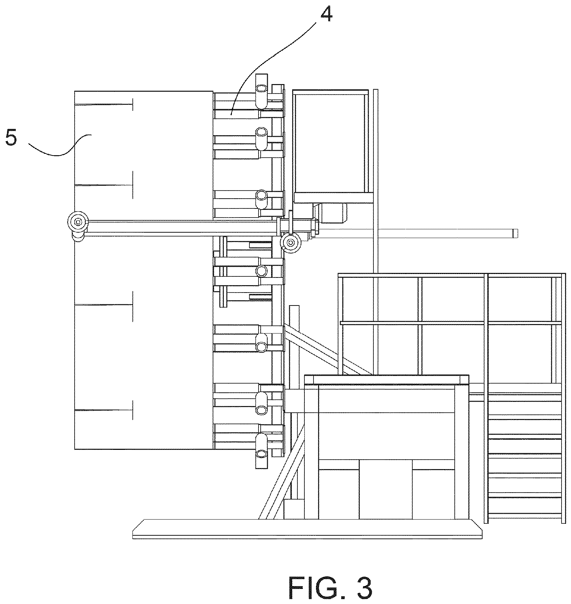

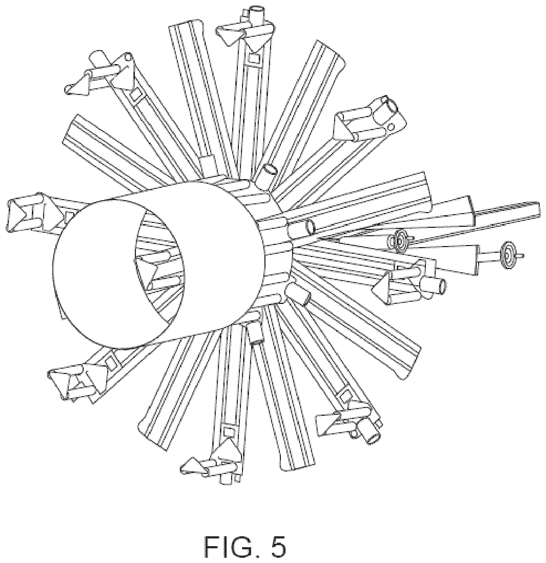

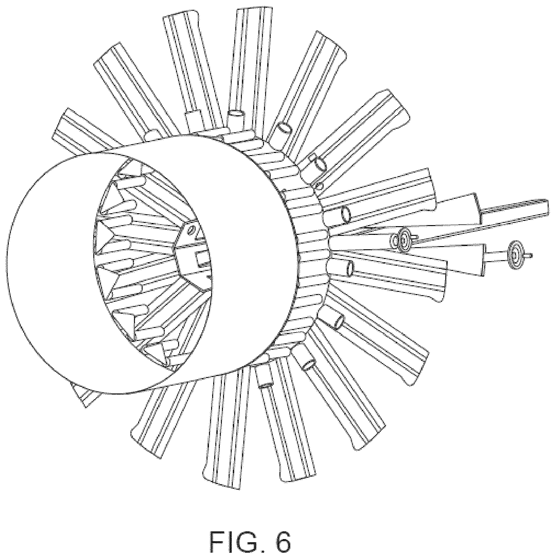

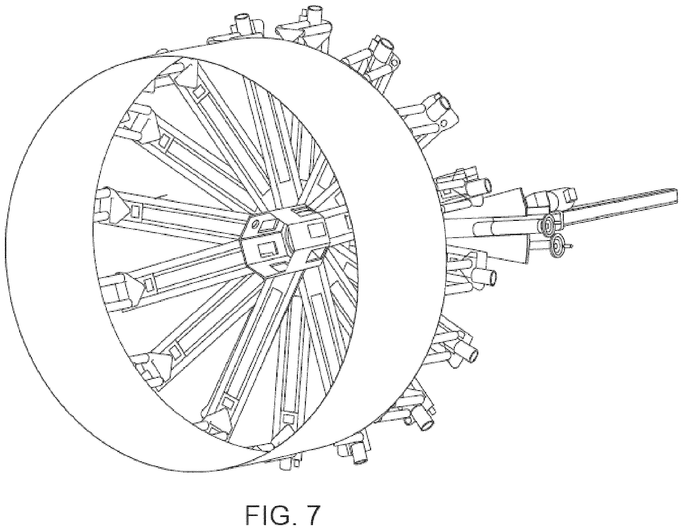

FIGURES 1 and 3 show the ejector roller in an extended position and FIGURES 5, 6 and 7 in a rest position close to the winding star 2. FIGURES 5, 6 and 7 illustrate different setups of the winder for manufacturing different sizes of pipes. As can be seen from the figures, the ejector unit 6 can be adjusted accordingly.

The exemplifying example in the FIGURES shows one ejector unit only. The number of units may vary, in one embodiment the number of ejector unit is two in order to provide symmetric force for ejection. If more gentle pushing force is desired, more ejector units and ejector rollers may be used, It can be even contemplated that two or more parallel ejector rollers are used with one screw jack assembly or other linear actuator. units and ejector rollers may be used, It can be even contemplated that two or more parallel ejector rollers are used with one screw jack assembly or other linear actuator.

A second example apparatus is described below. This apparatus can be set on a factory floor below the mandrel 5 or alternatively on a support frame to any desired position. However, there is usually free space under the mandrel 5 and floor provides solid ground for support. The apparatus comprises two rails running parallel to each other and connected at their ends by end brackets 18. A carriage is set to run on the parallel rails. The carriage is connected to a transfer motor by a screw bar. The transfer motor is a unit comprising an electric motor and a gear box, for example. On the carriage are mounted two swinging arms. The pivot points of the swinging arms are on the carriage and at the free ends of the swinging arms are ejector rollers.

The operation principle. The position of the ejector rollers 12 is adjusted by turning the swinging arms according to the diameter of the mandrel so that the ejector rollers are positioned at correct radial positions in relation of the mandrel. The ejector rollers 12 are moved in longitudinal direction by operating the transfer motor, whereby the screw bar rotates and moves the carriage. The ejection of the pipe section occur same way as described above.

Alternative of the apparatus can be contemplated. For example, the apparatus may comprise one rail running parallel to the longitudinal axis of the mandrel 5, a carriage mounted on the rail, the carriage being transferrable along the rail, a linear actuator for transferring the carriage and an ejector element 12 mounted on the carriage by a transfer actuator for adjusting the position of the ejector element 12 in radial direction of the mandrel 5. Other alternative may be contemplated by combining features of this apparatus to the one described previously.

### INDUSTRIAL APPLICABILITY

The invention has industrial applicability in manufacture of spirally wound polyolefin pipes and vessels.

### REFERENCE SIGNS LIST

- 1: winder frame
- 2: winder star
- 3: spoke
- 4: radial support roller
- 5: mandrel
- 6: ejector unit
- 7: ejector fastening plate
- 8: adjustment rails
- 9: ejector radial adjustment trolley
- 10: hand wheel
- 11: screw jack assembly
- 12: ejector roller
- 13: ejector roller telescope
- 15: motor/gear unit

## Claims

1. A method for ejecting a spirally wound pipe section from a mandrel (5), wherein the mandrel (5) has a longitudinal axis around of which it is rotated and a cylindrical outer surface around which the profile forming the pipe section is spirally wound, the method comprising steps of:
- cutting the profile that is wound on the mandrel (5) to form an end of the pipe section, and
- pushing at least one ejector element (12) against the end of the pipe section, **characterized** of
- holding the at least one ejector element (12) stationary in the direction of longitudinal axis of the mandrel (5),
- rotating the mandrel (5) and pipe section in the same direction as the profile is wound on the mandrel (5) so that the ejector element (12) pushes the pipe in the direction of the longitudinal axis of the mandrel (5) according to the rise of the angle of the end of the pipe, and
- the ejector element (12) is moved towards the end of the mandrel (5) every time the end of the profile is detected.

2. A method according to claim 1, wherein the mandrel (5) is rotated during ejection at a speed that exceeds the speed of rotation used during manufacture.

3. A method according to claim 1 or 2, wherein passing of the at least one ejector element (12) past the cut end of the profile is detected and the at least one ejector element (12) is pushed thereafter in the direction of the longitudinal axis of the mandrel (5) so that the ejector element (12) is set against the end of the pipe section.

4. A method according to one of the claims 1-3, wherein the ejector element is a roller (12) and the passing of the at least one roller past the cut end of the profile is detected by monitoring the rotating movement of the roller (12).

5. A method according to any of the claims 1 - 4, wherein the contact of the at least one ejector element (12) with the end of the pipe section is detected by monitoring the power needed to hold the ejector element (12) stationary in direction of the longitudinal axis of the mandrel (5).

6. An apparatus for ejecting a spirally wound polyolefin pipe section from a mandrel (5), comprising the mandrel (5) having a longitudinal axis around of which it can be rotated and a cylindrical outer surface around which the profile forming the pipe section can be spirally wound, comprising:
- at least one ejector element (12), and
- an actuator for rotating the mandrel (5).
**characterized** of
- a pusher (11) for transferring the at least one ejector element (12) parallel to the longitudinal axis of the mandrel (5) and holding the ejector element (12) on a set position.

7. An apparatus according to the claim 6, comprising at least one rail (8) running parallel to the longitudinal axis of the mandrel (5), a carriage (9) mounted on the at least one rail (8) and transferrable along the at least one rail (8), a linear actuator (11) for transferring the carriage (9) and an ejector element (12) mounted on the carriage (9) by a transfer actuator (11) for adjusting the position of the ejector element (12) in radial direction of the mandrel (12).

8. An apparatus according to the claim 7, comprising two parallel rails (8) and two ejector elements (12).

9. An apparatus according to one of the claims 6-8, wherein the ejector element is a roller (12) that has a rotation axis crosswise to the longitudinal axis of the mandrel (12).

10. An apparatus according to any of the claims 6-9, comprising a monitoring system for detecting contact of the at least one roller (12) with the end of the pipe section on the mandrel (12).

11. An apparatus according to the claim 6, comprising a detector for detecting the passing of the at least one roller (12) past the cut end of the profile that has been wound around the mandrel (5).

12. An apparatus according to the claim 11, wherein the detector is a detector that monitors the rotation of the at least one roller (12).

13. An apparatus according to the claim10, wherein the monitoring system for detecting the contact of the at least one roller (12) with the end of the pipe section comprises a control system for monitoring the power needed to move the roller (12) in direction of the longitudinal axis of the mandrel (5).

14. An apparatus according to any of the claims 6 - 13, comprising at least two ejector rollers (12).

15. An apparatus according to any of the claims 6 - 14, comprising at least one transfer actuator (10) for moving at least one roller (12) crosswise to the longitudinal axis of the mandrel (5).

## Patentansprüche

1. Verfahren zum Ausstoßen eines spiralförmig gewickelten Rohrabschnitts aus einem Dorn (5), wobei der Dorn (5) eine Längsachse aufweist, um die er gedreht wird, und eine zylindrische Außenfläche, um die das den Rohrabschnitt bildende Profil spiralförmig gewickelt wird, wobei das Verfahren folgende Schritte umfasst:
- Schneiden des Profils, das auf den Dorn (5) gewickelt ist, um ein Ende des Rohrabschnitts zu bilden, und
- Schieben mindestens eines Ausstoßelements (12) gegen das Ende des Rohrabschnitts, **gekennzeichnet durch**
- Halten des mindestens einen Ausstoßelements (12) stationär in der Richtung der Längsachse des Dorns (5),
- Drehen des Dorns (5) und des Rohrabschnitts in der gleichen Richtung wie das Profil auf den Dorn (5) gewickelt ist, so dass das Ausstoßelement (12) das Rohr entsprechend dem Anstieg des Winkels des Rohrendes in die Richtung der Längsachse des Dorns (5) schiebt, und
- das Ausstoßelement (12) jedes Mal, wenn das Profilende erkannt wird, zum Ende des Dorns (5) bewegt wird.

2. Verfahren nach Anspruch 1, wobei der Dorn (5) beim Auswerfen mit einer Geschwindigkeit gedreht wird, welche die bei der Herstellung verwendete Drehgeschwindigkeit übersteigt.

3. Verfahren nach Anspruch 1 oder 2, wobei das Vorbeilaufen des mindestens einen Ausstoßelements (12) am abgeschnittenen Ende des Profils erkannt wird, und das mindestens eine Ausstoßelement (12) danach in die Richtung der Längsachse des Dorns (5) geschoben wird, sodass das Ausstoßelement (12) dem Ende des Rohrabschnitts entgegengestellt wird.

4. Verfahren nach einem der Ansprüche 1-3, wobei das Ausstoßelement eine Rolle (12) ist, und das Vorbeilaufen der mindestens einen Rolle am abgeschnittenen Ende des Profils durch Überwachen der Drehbewegung der Rolle (12) erkannt wird.

5. Verfahren nach einem der Ansprüche 1-4, wobei der Kontakt des mindestens einen Ausstoßelements (12) mit dem Ende des Rohrabschnitts durch Überwachen der Leistung erkannt wird, die erforderlich ist, um das Ausstoßelement (12) in Richtung der Längsachse des Dorns (5) stationär zu halten.

6. Einrichtung zum Ausstoßen eines spiralförmig gewickelten Polyolefin-Rohrabschnitts aus einem Dorn (5), umfassend den Dorn (5), der eine Längsachse aufweist, um die er gedreht werden kann, und eine zylindrische Außenfläche, um die das den Rohrabschnitt bildende Profil spiralförmig gewickelt werden kann, umfassend:
- mindestens ein Ausstoßelement (12), und
- einen Stellantrieb zum Drehen des Dorns (5).
**gekennzeichnet durch**
- einen Schieber (11) zum Übergeben des mindestens einen Ausstoßelements (12) parallel zur Längsachse des Dorns (5) und zum Halten des Ausstoßelements (12) in einer eingestellten Position.

7. Einrichtung nach Anspruch 6, umfassend mindestens eine Schiene (8), die parallel zur Längsachse des Dorns (5) verläuft, einen Schlitten (9), der auf der mindestens einen Schiene (8) montiert ist und entlang der mindestens einen Schiene (8) übergebbar ist, einen Linearstellantrieb (11) zum Übergeben des Schlittens (9) und ein Ausstoßelement (12), das über einen Übergabestellantrieb (11) am Schlitten (9) montiert ist, zum Anpassen der Position des Ausstoßelements (12) in radialer Richtung des Dorns (12).

8. Einrichtung nach Anspruch 7, umfassend zwei parallele Schienen (8) und zwei Ausstoßelemente (12).

9. Einrichtung nach einem der Ansprüche 6-8, wobei das Ausstoßelement eine Rolle (12) ist, die eine Drehachse quer zur Längsachse des Dorns (12) aufweist.

10. Einrichtung nach einem der Ansprüche 6-9, umfassend ein Überwachungssystem zum Erkennen von Kontakt der mindestens einen Rolle (12) mit dem Ende des Rohrabschnitts auf dem Dorn (12).

11. Einrichtung nach Anspruch 6, umfassend einen Detektor zum Erkennen des Vorbeilaufens der mindestens einen Rolle (12) an dem abgeschnittenen Ende des Profils, das um den Dorn (5) gewickelt worden ist.

12. Einrichtung nach Anspruch 11, wobei der Detektor ein Detektor ist, der die Drehung der mindestens einen Rolle (12) überwacht.

13. Einrichtung nach Anspruch 10, wobei das Überwachungssystem zum Erkennen des Kontakts der mindestens einen Rolle (12) mit dem Ende des Rohrabschnitts ein Steuerungssystem zum Überwachen der Leistung umfasst, die erforderlich ist, um die Rolle (12) in Richtung der Längsachse des Dorns (5) zu bewegen.

14. Einrichtung nach einem der Ansprüche 6 - 13, umfassend mindestens zwei Ausstoßrollen (12).

15. Einrichtung nach einem der Ansprüche 6-14, umfassend mindestens einen Übergabestellantrieb (10) zum Bewegen von mindestens einer Rolle (12) quer zur Längsachse des Dorns (5).

## Revendications

1. Procédé pour éjecter une section de tuyau enroulée de manière hélicoïdale d'un mandrin (5), dans lequel le mandrin (5) présente un axe longitudinal autour duquel il tourne et une surface extérieure cylindrique autour de laquelle le profilé formant la section de tuyau est enroulé de manière hélicoïdale, le procédé comprenant les étapes consistant à :
- découper le profilé qui est enroulé sur le mandrin (5) pour former une extrémité de la section de tuyau, et
- pousser au moins un élément éjecteur (12) contre l'extrémité de la section de tuyau, **caractérisé par**
- le maintien de l'au moins un élément éjecteur (12) de manière fixe dans la direction de l'axe longitudinal du mandrin (5),
- le fait de mettre en rotation le mandrin (5) et la section de tuyau dans le même direction à mesure que le profilé est enroulé sur le mandrin (5) de sorte que l'élément éjecteur (12) pousse le tuyau en direction de l'axe longitudinal du mandrin (5) en fonction de l'élévation de l'angle de l'extrémité du tuyau, et
- l'élément éjecteur (12) est déplacé vers l'extrémité du mandrin (5) à chaque fois que l'extrémité du profilé est détectée.

2. Procédé selon la revendication 1, dans lequel le mandrin (5) est mis en rotation pendant l'éjection à une vitesse qui dépasse la vitesse de rotation utilisée pendant la fabrication.

3. Procédé selon la revendication 1 ou 2, dans lequel le passage de l'au moins un élément éjecteur (12) au-delà de l'extrémité coupée du profilé est détecté et l'au moins un élément éjecteur (12) est ensuite poussé dans la direction de l'axe longitudinal du mandrin (5) de sorte que l'élément éjecteur (12) est placé contre l'extrémité de la section de tuyau.

4. Procédé selon l'une des revendications 1-3, dans lequel l'élément éjecteur est un rouleau (12) et le passage de l'au moins un rouleau au-delà de l'extrémité coupée du profilé est détecté en surveillant le mouvement de rotation du rouleau (12).

5. Procédé selon l'une quelconque des revendications 1-4, dans lequel le contact de l'au moins un élément éjecteur (12) avec l'extrémité de la section de tuyau est détecté en surveillant la puissance nécessaire pour maintenir l'élément éjecteur (12) de manière fixe dans la direction de l'axe longitudinal du mandrin (5).

6. Appareil pour éjecter une section de tuyau en polyoléfine enroulée de manière hélicoïdale d'un mandrin (5), comprenant le mandrin (5) présentant un axe longitudinal autour duquel il peut être mis en rotation et une surface extérieure cylindrique autour de laquelle le profilé formant la section de tuyau peut être enroulé de manière hélicoïdale, comprenant :
- au moins un élément éjecteur (12), et
- un actionneur permettant de mettre en rotation le mandrin (5)
**caractérisé par**
- un poussoir (11) pour transférer l'au moins un élément éjecteur (12) parallèlement à l'axe longitudinal du mandrin (5) et maintenir l'élément éjecteur (12) sur une position déterminée.

7. Appareil selon la revendication 6, comprenant au moins un rail (8) s'étendant parallèlement à l'axe longitudinal du mandrin (5), un chariot (9) monté sur l'au moins un rail (8) et pouvant se déplacer le long de l'au moins un rail (8), un actionneur linéaire (11) permettant de transférer le chariot (9) et un élément éjecteur (12) monté sur le chariot (9) par un actionneur de transfert (11) pour régler la position de l'élément éjecteur (12 ) en direction radiale du mandrin (12).

8. Appareil selon la revendication 7, comprenant deux rails parallèles (8) et deux éléments éjecteurs (12).

9. Appareil selon l'une des revendications 6-8, dans lequel l'élément éjecteur est un rouleau (12) qui présente un axe de rotation transversalement à l'axe longitudinal du mandrin (12).

10. Appareil selon l'une quelconque des revendications 6-9, comprenant un système de surveillance pour détecter l'entrée en contact de l'au moins un rouleau (12) avec l'extrémité de la section de tuyau sur le mandrin (12).

11. Appareil selon la revendication 6, comprenant un détecteur pour détecter le passage de l'au moins un rouleau (12) au-delà de l'extrémité coupée du profilé qui a été enroulé autour du mandrin (5).

12. Appareil selon la revendication 11, dans lequel le détecteur est un détecteur qui surveille la rotation de l'au moins un rouleau (12).

13. Appareil selon la revendication 10, dans lequel le système de surveillance pour détecter l'entrée en contact de l'au moins un rouleau (12) avec l'extrémité de la section de tuyau comprend un système de commande pour surveiller la puissance nécessaire pour déplacer le rouleau (12) en direction de l'axe longitudinal du mandrin (5).

14. Appareil selon l'une quelconque des revendications 6-13, comprenant au moins deux rouleaux éjecteurs (12).

15. Appareil selon l'une quelconque des revendications 6-14, comprenant au moins un actionneur de transfert (10) pour déplacer au moins un rouleau (12) transversalement à l'axe longitudinal du mandrin (5).
